# EUROPEAN PATENT APPLICATION

(11) **EP 3 910 757 A1**
(43) Date of publication of application: **17.11.2021**
(21) Application number: 19908869.1
(22) Date of filing: 14.11.2019
(51) Int. Cl.: H02K 1/04, H02K 1/12

(54) **MOTOR**

(30) Priority: 08.01.2019 KR 20190002260
(71) Applicant: LG Innotek Co., Ltd., Seoul 07796 (KR)
(72) Inventor: SHIN, Dong Hyun, Seoul 07796 (KR)
(74) Representative: M. Zardi & Co S.A.
(86) International application number: PCT/KR2019/015489
(87) International publication number: WO 2020/145498

(57) **Abstract**

The embodiment relates to a motor comprising: a stator; a rotor disposed in the stator; and a shaft coupled to the rotor, wherein the stator comprises a stator core, an insulator coupled to the stator core, and a coil disposed on the insulator, wherein the insulator comprises a body around which the coil is wound, an outer portion extended from the body, and a first opening formed in an inner surface of the outer portion and a second opening formed on an upper surface of the outer portion, wherein a portion of the coil is disposed in a hole formed by connecting the first opening and the second opening, and wherein the coil disposed in the hole is not exposed to an inner surface of the insulator. Accordingly, the motor forms, in the insulator, a hole which can guide a disposition location of the coil such that an end of the coil can be positioned on a predetermined assembly location.

## Description

### [Technical Field]

An embodiment relates to a motor.

### [Background Art]

Motors are apparatuses configured to convert electrical energy to mechanical energy to obtain rotational forces and are widely used for vehicles, home appliances, industrial machines, and the like.

The motor may include a housing, a shaft, a stator disposed on an inner circumferential surface of the housing, a rotor disposed on an outer circumferential surface of the shaft, and the like. In this case, an electrical interaction is induced between the stator and the rotor of the motor so that rotation of the rotor is induced. In addition, the stator may include a stator core, an insulator disposed on the stator core, and a coil wound around the insulator.

Meanwhile, a busbar electrically connected to the coil may be disposed on the stator. In this case, the busbar may include a busbar housing substantially having a ring shape and a busbar terminal coupled to the busbar housing and connected to the coil.

In this case, an end portion of the coil wound around the insulator should be disposed at a specific position in consideration of ease of assembly of the coil and the busbar terminal and tolerance management. Accordingly, in order to position the end portion of the coil at the specific position, an additional complex structure should be formed on the stator, but the complex structure has difficulty in manufacturing and tolerance managing.

### [Technical Problem]

An embodiment is directed to providing a motor in which an end portion of a coil is positioned at a preset position through a structure of an insulator.

An embodiment is directed to a motor in which the end portion of the coil is prevented from being separated from the position when a stator is assembled.

Objectives to be solved through the present invention are not limited to the above-described objectives, and the other objectives which are not described above will be clearly understood by those skilled in the art from the following description.

### [Technical Solution]

One aspect of the present invention provides a motor including a stator, a rotor disposed in the stator, and a shaft coupled to the rotor, wherein the stator includes a stator core, an insulator coupled to the stator core, and a coil disposed on the insulator, the insulator includes a body around which the coil is wound, an outer side portion extending from the body, a first opening formed in an inner side surface of the outer side portion, and a second opening formed in an upper surface of the outer side portion, one region of the coil is disposed in a hole formed by connecting the first opening and the second opening, and the coil disposed in the hole is not exposed to an inner side surface of the insulator.

The insulator may include a plurality of unit insulators, and the hole may be formed by coupling two unit insulators among the plurality of unit insulators.

Another aspect of the present invention provides a motor including a stator, a rotor disposed in the stator, and a shaft coupled to the rotor, wherein the stator includes a stator core, an insulator coupled to the stator core, and a coil disposed on the insulator, the insulator includes a first unit insulator, a second unit insulator disposed adjacent to the first unit insulator based on a circumferential direction, a first opening formed in an inner side surface, a second opening formed in an upper surface, and a hole formed by connecting the first opening and the second opening, each of the first unit insulator and the second unit insulator includes a body on which the coil is disposed and an outer side portion extending from the body, the first opening is formed by an inner side surface of the outer side portion of the first unit insulator and an inner side surface of the outer side portion of the second unit insulator, the second opening is formed by an upper surface of the outer side portion of the first unit insulator and an upper surface of the outer side portion of the second unit insulator, at least one of a first side surface of the first unit insulator and a second side surface of the second unit insulator include protrusions, and at least one of the protrusions forms a side surface of the second opening.

One region of the coil may be disposed in the hole, and the coil disposed in the hole may not be exposed to the inner side surface of the insulator.

The protrusions may be formed as two protrusions protruding from the first side surface of the outer side portion of the first unit insulator in the circumferential direction, and one region of the coil may be disposed between the protrusions in a radial direction.

The second unit insulator may include at least one groove formed in the second side surface of the outer side portion, and the at least one of the protrusions of the first unit insulator may be disposed in the groove.

The protrusions may be formed as two protrusions protruding from the first side surface of the outer side portion of the first unit insulator in the circumferential direction, the groove may be formed as two grooves formed concave in the second side surface of the outer side portion of the second unit insulator in the circumferential direction, and each of the two protrusions may be disposed in each of the two grooves.

One region of the coil may be disposed between the two protrusions in a radial direction.

The first unit insulator may include at least one groove formed in the first side surface of the outer side portion, the second unit insulator may include at least one protrusion protruding from the second side surface of the outer side portion in the circumferential direction, and the protrusion of the second unit insulator may be coupled to the groove of the first unit insulator.

The protrusion of the first unit insulator and the protrusion of the second unit insulator may form a side surface of the second opening.

One region of the coil may be disposed between the protrusion of the first unit insulator and the protrusion of the second unit insulator in a radial direction.

The coil may be disposed to pass through the first opening and the second opening.

One coil among the coils disposed around the first unit insulator and the second unit insulator may pass through the hole.

The first opening may be defined by a groove formed at one side of the inner side surface of the outer side portion of the first unit insulator and the other side of the inner side surface of the outer side portion of the second unit insulator.

The second unit insulator may include a groove formed at the other side of the inner side surface of the outer side portion, and the first opening may be defined by the groove formed in the first unit insulator and the groove formed in the second unit insulator.

The first unit insulator may include a groove formed at one side of the inner side surface of the outer side portion, the second unit insulator may include a groove formed at the other side of the inner side surface of the outer side portion, and the groove formed at one side of the inner side surface of the first unit insulator may be disposed to face the groove formed at the other side of the inner side surface of the second unit insulator.

Still another aspect of the present invention provides a motor including a stator, a rotor disposed in the stator, and a shaft coupled to the rotor, wherein the stator includes a stator core, an insulator coupled to the stator core, and a coil disposed on the insulator, the insulator includes a body on which the coil is disposed, an outer side portion extending from the body, and a hole connecting an opening formed in an inner side surface and an opening formed in an upper surface of the outer side portion, and an end portion of the coil wound around the body is guided by the hole and exposed from the upper surface.

The insulator may include a first unit insulator and a second unit insulator which are disposed in a circumferential direction, and the hole may be formed between the first unit insulator and the second unit insulator.

The first unit insulator may include a first side surface inner protrusion and a first side surface outer protrusion which protrude from one side of the outer side portion in the circumferential direction, the first side surface inner protrusion and the first side surface outer protrusion may be disposed to be spaced apart from each other in a radial direction, and one region of the coil may be disposed between the first side surface inner protrusion and the first side surface outer protrusion.

The first side surface inner protrusion may be disposed above a first opening formed in the inner side surface.

The second unit insulator may include a second side surface inner protrusion protruding from the other side of the outer side portion in the circumferential direction, the first unit insulator may include a groove concavely formed in a first side surface of the outer side portion in the circumferential direction, and the second side surface inner protrusion may be disposed in the groove and supported by the outer side portion of the first unit insulator.

A lower surface of the second side surface inner protrusion may be disposed to be in contact with an upper surface of the first side surface inner protrusion.

The second unit insulator may include a groove concavely formed in a second side surface of the outer side portion in the circumferential direction, and an end portion of the first side surface outer protrusion may be disposed in the groove of the second unit insulator.

Yet another aspect of the present invention provides a motor including a stator, a rotor disposed in the stator, and a shaft coupled to the rotor, wherein the stator is formed by arranging a plurality of unit stators in a circumferential direction, the unit stator includes a stator core, an insulator coupled to the stator core, and a coil disposed on the insulator, the insulator includes a body on which the coil is disposed, an outer side portion extending from the body, a first side surface inner protrusion and a first side surface outer protrusion which protrude from a first side surface of the outer side portion in the circumferential direction, and a second side surface inner protrusion protruding from a second side surface of the outer side portion in the circumferential direction, the first side surface inner protrusion and the first side surface outer protrusion are disposed to be spaced apart from each other in a radial direction, and a distance from an upper surface of the outer side portion to a lower surface of the second side surface inner protrusion is the same as a distance from the upper surface of the outer side portion to an upper surface of the first side surface inner protrusion.

### [Advantageous Effects]

According to embodiments, in a motor having the above-described structure, since a hole capable of guiding a position at which a coil is disposed is formed in an insulator, an end portion of the coil can be positioned at a preset assembly position.

In this case, the hole can be formed using a protrusion protruding from an outer side portion of a unit insulator in a circumferential direction. Accordingly, the end portion of the coil can be prevented from being separated from a preset assembly position by the protrusion.

In addition, since the unit insulator is coupled to another unit insulator disposed adjacent to the unit insulator using the protrusion, a coupling force and stiffness of the insulator can be improved.

Various useful advantages and effects of the embodiments are not limited to the above-described contents and will be more easily understood while the specific embodiments of the present invention will be described.

### [Description of Drawings]

FIG. 1 is a view illustrating a motor according to an embodiment.
FIG. 2 is a perspective view illustrating a stator of the motor according to the embodiment.
FIG. 3 is an enlarged view illustrating a region A of FIG. 2.
FIG. 4 is a perspective view illustrating a unit stator of the motor according to the embodiment.
FIG. 5 is a perspective view illustrating a first side surface of a unit insulator disposed in the motor according to the embodiment.
FIG. 6 is a perspective view illustrating a second side surface of the unit insulator of the motor according to the embodiment.
FIG. 7 is a plan view illustrating the unit insulator disposed in the motor according to the embodiment.
FIG. 8 is a bottom view illustrating the unit insulator disposed in the motor according to the embodiment.
FIG. 9 is a left side view illustrating the unit insulator disposed in the motor according to the embodiment.
FIG. 10 is a right side view illustrating the unit insulator disposed in the motor according to the embodiment.
FIG. 11 is a perspective view illustrating a layout of two unit insulators disposed in the motor according to the embodiment.
FIG. 12 is a plan view illustrating the layout of two unit insulators disposed in the motor according to the embodiment.
FIG. 13 is a cross-sectional view taken along line A-A of FIG. 12.
FIG. 14 is a view illustrating a first example in which a hole of the motor is formed according to the embodiment.
FIG. 15 is a view illustrating a second example in which a hole of the motor is formed according to the embodiment.
FIG. 16 is a view illustrating a third example in which a hole of the motor is formed according to the embodiment.

### [Modes of the Invention]

Hereinafter, exemplary embodiments of the present invention will be described in detail with reference to the accompanying drawings.

However, the technical spirit of the present invention is not limited to some embodiments which will be described and may be realized using various other embodiments, and at least one component of the embodiments may be selectively coupled, substituted, and used to realize the technical spirit within the range of the technical spirit.

In addition, unless clearly and specifically defined otherwise by context, all terms (including technical and scientific terms) used herein can be interpreted as having customary meanings to those skilled in the art, and meanings of generally used terms, such as those defined in commonly used dictionaries, will be interpreted by considering contextual meanings of the related technology.

In addition, the terms used in the embodiments of the present invention are considered in a descriptive sense and not for limiting the present invention.

In the present specification, unless clearly indicated otherwise by the context, singular forms include the plural forms thereof, and in a case in which "at least one (or one or more) among A, B, and C" is described, this may include at least one combination among all possible combinations of A, B, and C.

In addition, in descriptions of components of the present invention, terms such as "first," "second," "A," "B," "(a)," and "(b)" can be used.

The terms are only to distinguish one element from another element, and an essence, order, and the like of the element are not limited by the terms.

In addition, it should be understood that, when an element is referred to as being "connected or coupled" to another element, such a description may include both of a case in which the element is directly connected or coupled to another element and a case in which the element is connected or coupled to another element with still another element disposed therebetween.

In addition, in a case in which any one element is described as being formed or disposed "on or under" another element, such a description includes both a case in which the two elements are formed or disposed in direct contact with each other and a case in which one or more other elements are interposed between the two elements. In addition, when one element is described as being disposed "on or under" another element, such a description may include a case in which the one element is disposed at an upper side or a lower side with respect to another element.

Hereinafter, in the detailed description of the example embodiments of the invention with reference to the accompanying drawings, components that are the same or correspond to each other will be denoted by the same reference numerals regardless of the figure numbers, and redundant descriptions will be omitted.

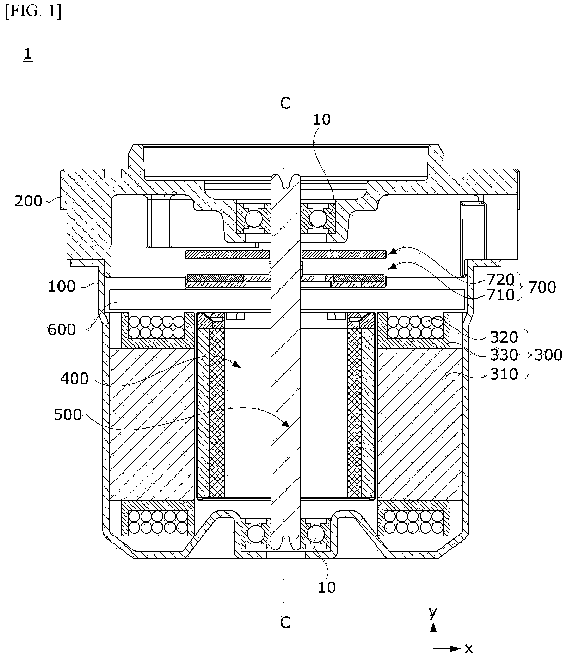

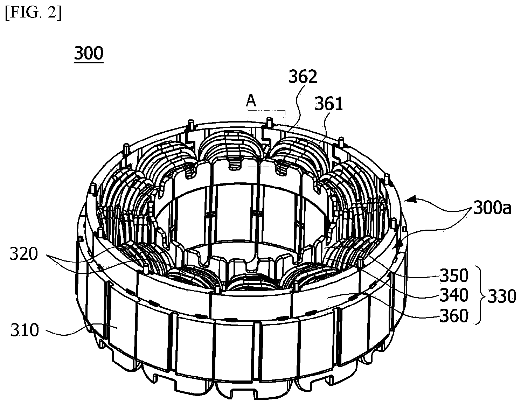

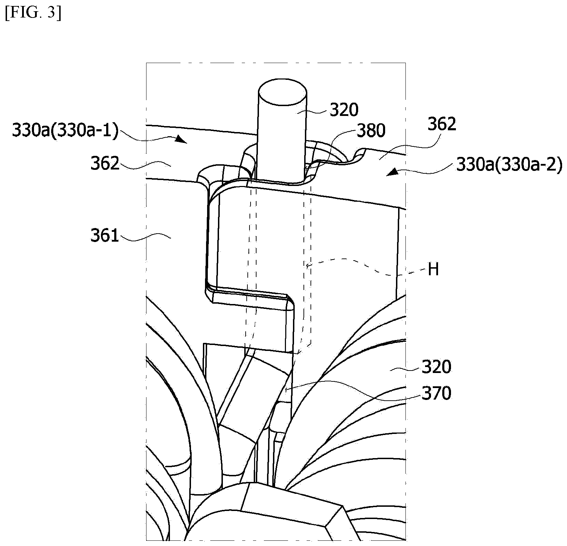

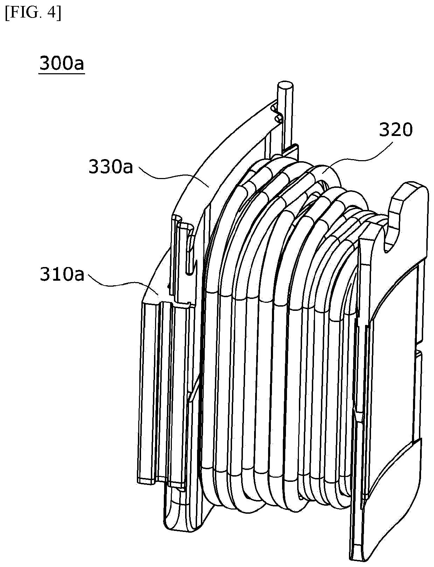

FIG. 1 is a view illustrating a motor according to an embodiment, FIG. 2 is a perspective view illustrating a stator of the motor according to the embodiment, FIG. 3 is an enlarged view illustrating a region A of FIG. 2, and FIG. 4 is a perspective view illustrating a unit stator of the motor according to the embodiment. In this case, an x direction illustrated in FIG. 1 denotes a radial direction, and a y direction denotes a shaft direction. In addition, the shaft direction is perpendicular to the radial direction. In this case, the term "shaft direction" may be a longitudinal direction of the shaft 500.

Referring to FIGS. 1 to 3, a motor 1 according to the embodiment may include a housing 100 in which an opening is formed at one side, a cover 200 disposed on the housing 100, a stator 300 disposed in the housing 100, a rotor 400 disposed inside the stator 300, a shaft 500 which is rotated with the rotor 400, a busbar 600 disposed on the stator 300, and a sensor part 700 which detects rotation of the shaft 500. In this case, the term "inside" may denote a direction toward a center C based on the radial direction, and the term "outside" may denote a direction opposite to "inside."

In the motor 1, coils 320 may be guided by using channels formed in insulators 330 of the stator 300. Accordingly, an end portion of the coil 320 may be positioned at a preset assembly position. In this case, the channel may be provided as a hole formed to pass through one region of the insulator 330.

Accordingly, since one region, which is disposed in the hole, of the coil 320 is disposed to be accommodated in the insulator 330, the one region may be disconnected from the outside. That is, the one region of the coil 320 guided by the channel and disposed in the channel may be isolated from the outside. Accordingly, the one region of the coil 320 disposed in the channel may not be exposed to the outside of the insulator 330.

The housing 100 and the cover 200 may form an exterior of the motor 1. In addition, an accommodation space may be formed by coupling the housing 100 and the cover 200. Accordingly, as illustrated in FIG. 1, the stator 300, the rotor 400, the shaft 500, and the like may be disposed in the accommodation space. In this case, the shaft 500 is rotatably disposed in the accommodation space. Accordingly, the motor 1 may include bearings 10 disposed in an upper portion and a lower portion of the shaft 500.

The housing 100 may be formed in a cylindrical shape. In addition, the housing 100 may accommodate the stator 300, the rotor 400, and the like therein. In this case, a shape or material of the housing 100 may be variously changed. For example, the housing 100 may be formed of a metal material which firmly withstands even at high temperature.

The housing 100 may include a pocket portion capable of accommodating the bearing 10 in a lower portion. In this case, the pocket portion of the housing 100 may be referred to as a housing pocket portion.

The cover 200 may be disposed on the housing 100, that is, on an open surface of the housing 100, to cover the housing 100.

In addition, the cover 200 may include a pocket portion capable of accommodating the bearing 10. In this case, the pocket portion of the cover 200 may be referred to as a cover pocket portion.

The stator 300 may be disposed inside the housing 100. In this case, the stator 300 may be supported by an inner circumferential surface of the housing 100. In addition, the stator 300 may be disposed outside the rotor 400. That is, the rotor 400 may be rotatably disposed inside the stator 300.

Referring to FIGS. 1 to 4, the stator 300 may include stator cores 310, the coils 320 wound around the stator cores 310, and the insulators 330 disposed between the stator core 310 and the coil 320. In this case, the coil 320 may be guided by a hole H formed in the insulator 330.

The coil 320 configured to generate a rotating magnetic field may be wound around the stator core 310. In this case, the stator core 310 may be formed as one single core or a plurality of divided cores that are coupled.

In addition, the stator core 310 may be formed in a form in which a plurality of thin steel plates are stacked on each other, but the present invention is not necessarily limited thereto. For example, the stator core 310 may also be formed as one single product.

The stator core 310 may include a yoke (not shown) having a cylindrical shape and a plurality of teeth (not shown). In this case, the tooth may be disposed to protrude from the yoke in the radial direction (x direction) based of the center C of the stator core 310. In addition, the plurality of teeth may be disposed to be spaced apart from each other in a circumferential direction of the yoke. Accordingly, slots may be formed between the teeth.

The tooth may be disposed to face a magnet of the rotor 400. In addition, the coil 320 is wound around the tooth.

The insulator 330 insulates the stator core 310 from the coil 320. Accordingly, the insulator 330 may be disposed between the stator core 310 and the coil 320. Accordingly, the coil 320 may be wound around the stator core 310 on which the insulator 330 is disposed.

The coil 320 may be disposed to pass through a first opening 370 and a second opening 380. Accordingly, the coil 320 may be guided by the hole H formed in the insulator 330 and may not be exposed to an inner side surface 361 of the insulator 330. In addition, as illustrated in FIG. 2, the end portion of the coil 320 may be disposed upward from the insulator 330 and disposed at the preset assembly position.

Referring to FIGS. 2 and 3, the insulator 330 may include a body 340 around which the coil 320 is wound, an inner side portion 350 extending from an inner side of the body 340, and an outer side portion 360 extending from an outer side of the body 340. As illustrated in FIG. 4, a part of the outer side portion 360 may be disposed on the stator core 310.

In addition, the insulator 330 may include the first opening 370 formed in the inner side surface 361 of the outer side portion 360, the second opening 380 formed in an upper surface 362 of the outer side portion 360, and the hole H formed by connecting the first opening 370 and the second opening 380. Accordingly, the coil 320 may enter the hole H through the first opening 370 and be exposed to a side of the upper surface 362 of the insulator 330 through the second opening 380. In this case, the one region of the coil 320 disposed in the hole H is not exposed to the outside due to the inner side surface 361. In this case, a position at which the second opening 380 is formed may be an assembly position provided for connecting the end portion of the coil 320 and the busbar 600.

The body 340 may be formed in a "⊂" shape, and a groove may be formed in a side surface of the body 340. In this case, the groove may have a groove shape which is concavely formed. In addition, when the coil 320 is wound, the groove may guide winding of the coil 320.

The inner side portion 350 supports the coil 320 wound around the body 340 to prevent the coil 320 from being separated therefrom inward.

The inner side portion 350 may be disposed inside the body 340. In addition, the inner side portion 350 may be formed to protrude from the inner side of the body 340 in the shaft direction and the circumferential direction.

The outer side portion 360 supports the coil 320 wound around the body 340 to prevent the coil 320 from being separated therefrom outward.

The outer side portion 360 may be disposed outside the body 340. In addition, the outer side portion 360 may be formed to protrude from the outer side of the body 340 in the shaft direction and the circumferential direction.

Referring to FIGS. 2 to 4, the stator 300 may be formed of a plurality of unit stators 300a disposed in the circumferential direction based on the center C.

The unit stators 300a may include unit stator cores 310a, unit insulators 330a disposed on the unit stator cores 310a, and the coils 320 wound around the unit insulators 330a.

The unit stator core 310a may include a yoke having an arc shape and a tooth protruding from the yoke in the radial direction. Accordingly, a plurality of unit stators cores 310a may be disposed in the circumferential direction to form the stator core 310.

In addition, the unit insulator 330a may also be disposed on the stator core 310 in the circumferential direction to form the insulator 330.

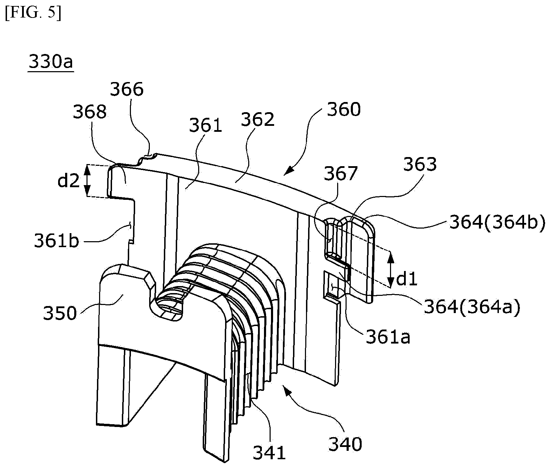

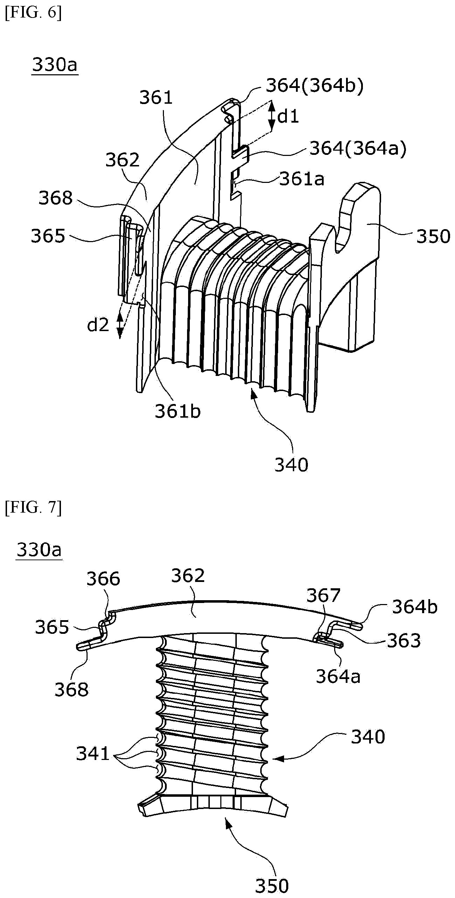

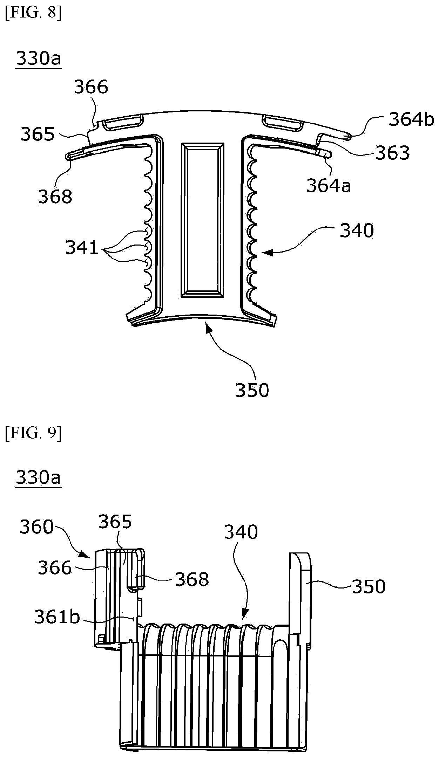

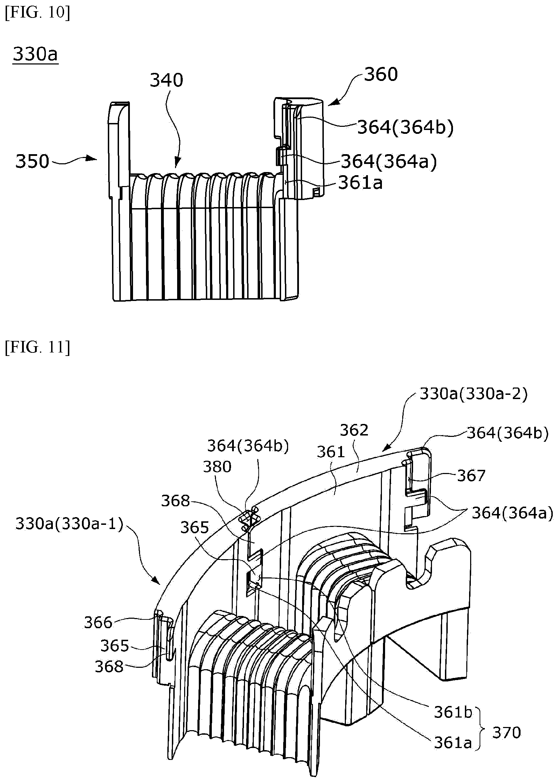

FIG. 5 is a perspective view illustrating a first side surface of the unit insulator disposed in the motor according to the embodiment, FIG. 6 is a perspective view illustrating a second side surface of the unit insulator of the motor according to the embodiment, FIG. 7 is a plan view illustrating the unit insulator disposed in the motor according to the embodiment, FIG. 8 is a bottom view illustrating the unit insulator disposed in the motor according to the embodiment, FIG. 9 is a left side view illustrating the unit insulator disposed in the motor according to the embodiment, and FIG. 10 is a right side view illustrating the unit insulator disposed in the motor according to the embodiment.

Referring to FIGS. 5 to 10, the unit insulator 330a may include one body 340 around which the coil 320 is wound, the inner side portion 350 disposed inside the body 340, and the outer side portion 360 disposed outside the body 340.

When viewed in the radial direction, the body 340 of the unit insulator 330a may be formed in the "⊂" shape, and a groove 341 may be formed in an outer surface of the body 340 in one direction of the outer surface. In this case, the groove 341 may have a groove shape which is concavely formed. In addition, when the coil 320 is wound, the groove 341 may guide winding of the coil 320.

The inner side portion 350 supports the coil 320 wound around the body 340 to prevent the coil 320 from being separated therefrom inward.

The inner side portion 350 may be disposed inside the body 340. In addition, the inner side portion 350 may be formed to protrude from an inner end portion of the body 340 in the shaft direction and the circumferential direction.

The outer side portion 360 supports the coil 320 wound around the body 340 to prevent the coil 320 from being separated therefrom outward.

The outer side portion 360 may be disposed outside the body 340. In addition, the outer side portion 360 may be formed to protrude from an outer end portion of the body 340 in the shaft direction and the circumferential direction.

Referring to FIGS. 5 to 10, the outer side portion 360 may include the inner side surface 361 extending from the body 340 in the shaft direction and the circumferential direction, the upper surface 362 extending from an upper side corner of the inner side surface 361 in the radial direction, a first side surface 363 disposed at one side with respect to the upper surface 362 in the circumferential direction, and a second side surface 365 disposed at the other side with respect to the upper surface 362 in the circumferential direction.

In this case, the inner side surface 361 may include a groove 361a disposed at a side, which is the one side, of the first side surface 363 and a groove 361b disposed at a side, which is the other side, of the second side surface 365. In this case, the groove 361a formed at the side of the first side surface 363 may be referred to as a first inner side surface groove, and the groove 361b formed at the side of the second side surface 365 may be referred to as a second inner side surface groove.

In addition, the outer side portion 360 may include a protrusion 364 protruding from the first side surface 363 based on the circumferential direction, a groove 366 concavely formed in the second side surface 365 in the circumferential direction to correspond to the protrusion 364 of the first side surface 363 in the circumferential direction, a groove 367 concavely formed in the first side surface 363 in the circumferential direction, and a protrusion 368 formed on the second side surface 365 in the circumferential direction to correspond the groove 367 of the first side surface 363.

In this case, the protrusion 364 of the first side surface 363 may be referred to as a first side surface protrusion, and the groove 367 of the first side surface 363 may be referred to as a first side surface groove. In addition, the protrusion 368 of the second side surface 365 may be referred to as a second side surface protrusion, and the groove 367 of the second side surface 365 may be referred to as a second side surface groove.

Accordingly, the first opening 370, the second opening 380, and the hole H which connects the first opening 370 and the second opening 380 so that the first opening 370 and the second opening 380 communicate with each other may be formed in the motor 1 using the protrusions and the grooves formed in the outer side portion 360 of the unit insulator 330a. In this case, the first opening 370 may be formed in the inner side surface 361 of the insulator 330, and the second opening 380 may be formed in the upper surface 362 of the insulator 330.

The protrusion 364 may be formed to protrude from the first side surface 363 of the outer side portion 360 in the circumferential direction. In addition, the protrusion 364 may include a first side surface inner protrusion 364a and a first side surface outer protrusion 364b disposed to be spaced apart from each other in the radial direction.

As illustrated in FIGS. 5 and 6, the inner side surface 361 of the outer side portion 360 may extend in the circumferential direction due to the first side surface inner protrusion 364a.

In this case, an upper surface of the first side surface inner protrusion 364a may be disposed to be spaced apart from the upper surface 362 of the outer side portion 360 by a predetermined separation distance d1 in the shaft direction. In this case, the first side surface inner protrusion 364a may protrude from a part of one side of the inner side surface 361 so that the groove 361a is formed at a side, which is one side of the inner side surface 361, of the first side surface 363. In addition, an end portion of the first side surface inner protrusion 364a may be disposed in the groove 361b formed at the side of the second side surface 365 of the unit insulator 330a disposed adjacent thereto.

Referring to FIGS. 7, the first side surface outer protrusion 364b may be disposed outside the first side surface inner protrusion 364a to be spaced apart therefrom based on the radial direction. Accordingly, the one region of the coil 320 disposed in the hole H may be disposed between the first side surface inner protrusion 364a and the first side surface outer protrusion 364b in the radial direction. In this case, the upper surface 362 of the outer side portion 360 may extend in the circumferential direction due to the first side surface outer protrusion 364b.

When viewed from the center C in the radial direction, the first side surface inner protrusion 364a may be disposed to overlap the first side surface outer protrusion 364b.

In addition, when the unit stator 300a is disposed in the circumferential direction, the end portion of the coil 320 wound around the body 340 may be disposed between the first side surface inner protrusion 364a and the first side surface outer protrusion 364b through the groove 361a formed at the side of the first side surface 363. Accordingly, the end portion of the coil 320 may be prevented from being separated in the radial direction by the first side surface inner protrusion 364a and the first side surface outer protrusion 364b.

The groove 366 may be concavely formed in the second side surface 365 in the circumferential direction. In addition, the groove 366 may be formed in the shaft direction. Referring to FIG. 9, the groove 366 may be formed outside the second side surface 365.

For example, the groove 366 may be formed to correspond to the first side surface outer protrusion 364b of the protrusion 364 of the first side surface 363. Accordingly, an end portion of the first side surface outer protrusion 364b may be disposed in or coupled to the groove 366. Accordingly, when the unit insulators 330a are annularly assembled, coupling of the first side surface outer protrusion 364b and the groove 366 may improve stiffness of the insulator 330.

The groove 367 concavely formed in the first side surface 363 in the circumferential direction may be formed in the shaft direction. Referring to FIG. 10, the groove 367 may be disposed on the first side surface inner protrusion 364a to arrange the protrusion 368 protruding from the second side surface 365 in the circumferential direction.

The protrusion 368 may be formed to protrude from the second side surface 365 in the circumferential direction. In this case, the protrusion 368 may be formed to correspond to the groove 367 of the first side surface 363. Accordingly, the protrusion 368 may be disposed in or coupled to the groove 367 of the first side surface 363 of the unit insulator 330a disposed adjacent thereto.

Accordingly, when the unit insulators 330a are annularly assembled, coupling of the protrusion 368 and the groove 367 may improve stiffness of the insulator 330. For example, when viewed in the radial direction, since the protrusion 368 is disposed to overlap one region of the outer side portion 360 of the unit insulator 330a disposed adjacent thereto, the protrusion 368 may be supported by the outer side portion 360.

Referring to FIG. 9, the protrusion 368 may be disposed inside the second side surface 365. Accordingly, the protrusion 368 may be referred to as a second side surface inner protrusion.

Referring to FIGS. 5 and 6, the inner side surface 361 and the upper surface 362 of the outer side portion 360 may extend in the circumferential direction due to the protrusion 368. In addition, the protrusion 368 may be disposed inside the second side surface 365 to be spaced apart from the first side surface outer protrusion 364b based on the radial direction.

In this case, a lower surface of the protrusion 368 may be formed to have a predetermined separation distance d2 from the upper surface 362 of the outer side portion 360. In this case, the separation distance d2 which is a distance from the upper surface 362 of the outer side portion 360 to the lower surface of the protrusion 368 may be the same as a separation distance d1 which is a distance from the upper surface 362 of the outer side portion 360 to the upper surface of the first side surface inner protrusion 364a.

Accordingly, when the unit stators 300a are annularly disposed, the lower surface of the protrusion 368 may be disposed to be in contact with the upper surface of the first side surface inner protrusion 364a.

Accordingly, due to the first side surface inner protrusion 364a and the protrusion 368, the one region of the coil 320 disposed in the hole H may be prevented from being exposed to the inner side surface 361 of the insulator 330.

Forming of the first opening 370, the second opening 380, and the hole H will be clearly described through coupling or a layout of two unit insulators 330a among the plurality of unit insulators 330a.

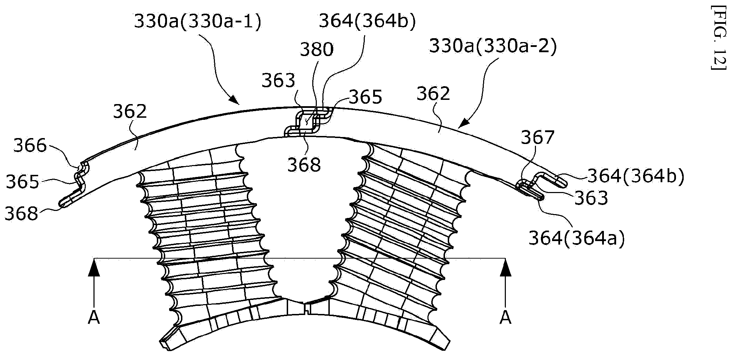

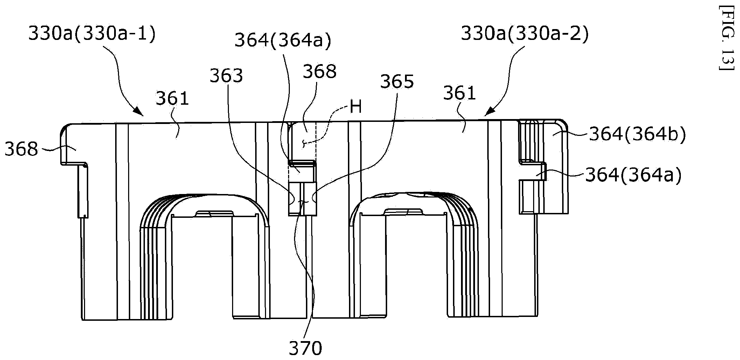

FIG. 11 is a perspective view illustrating the layout of two unit insulators disposed in the motor according to the embodiment, FIG. 12 is a plan view illustrating the layout of two unit insulators disposed in the motor according to the embodiment, and FIG. 13 is a cross-sectional view taken along line A-A of FIG. 12.

Referring to FIGS. 2, 3, and 11 to 13, two unit insulators 330a may be coupled so that the first opening 370, the second opening 380, and the hole H may be formed. For example, a first unit insulator 330a-1 and a second unit insulator 330a-2 may be coupled or disposed so that the first opening 370, the second opening 380, and the hole H may be formed.

In this case, among the coils 320 disposed on the first unit insulator 330a-1 and disposed on the second unit insulator 330a-2, one coil 320 may be disposed to pass through the hole H. In this case, the coil 320 may be disposed between the first unit insulator 330a-1 and the second unit insulator 330a-2 based on the circumferential direction, and the end portion of the coil 320 may be exposed upward through the second opening 380 at the preset assembly position.

The first opening 370 may be formed in the inner side surface 361 of the outer side portion 360. Specifically, the first opening 370 may be formed by one side of the inner side surface 361 of the first unit insulator 330a-1 and the other side of the inner side surface 361 of the second unit insulator 330a-2. In addition, a part of the coil 320 wound around the body 340 may enter the hole H through the first opening 370.

When viewed from the center C in the radial direction, the first opening 370 may be defined by the groove 361a formed at one side of the inner side surface 361 of the outer side portion 360 of the first unit insulator 330a-1 and the other side of the inner side surface 361 of the outer side portion 360 of the second unit insulator 330a-2. In this case, the term "one side" may denote the side of the first side surface 363 with respect to the inner side surface 361 in the circumferential direction, and the term "the other side" may denote the side of the second side surface 365 with respect to the inner side surface 361 in the circumferential direction.

Alternatively, the first opening 370 may be defined by the groove 361a formed at the side of the first side surface 363 which is one side of the inner side surface 361 of the outer side portion 360 of the first unit insulator 330a-1 and the groove 361b formed at the side of the second side surface 365 which is the other side of the inner side surface 361 of the outer side portion 360 of the second unit insulator 330a-2. In this case, the groove 361a of the first unit insulator 330a-1 may be disposed to face the groove 361b of the second unit insulator 330a-2.

A lower surface of the first side surface inner protrusion 364a may be disposed above the first opening 370. In addition, the end portion of the first side surface inner protrusion 364a may be disposed in a part of the groove 361b of the second unit insulator 330a-2. Accordingly, a width of the groove 361a formed at one side of the inner side surface 361 of the first unit insulator 330a-1 in the shaft direction is smaller than a width of the groove 361b formed at the other side of the inner side surface 361 of the second unit insulator 330a-2 in the shaft direction.

The second opening 380 may be formed in the upper surface 362 of the outer side portion 360. In addition, the coil 320 guided by the hole H may exit to the outside through the second opening 380.

The second opening 380 may be formed by the upper surface 362 of the first unit insulator 330a-1 and the upper surface 362 of the second unit insulator 330a-2.

Referring to FIG. 12, the side of the first side surface 363, which is one side of the upper surface 362 of the first unit insulator 330a-1, may be disposed to be spaced apart from the side of the second side surface 365 which is the other side of the upper surface 362 of the second unit insulator 330a-2. In addition, the first side surface outer protrusion 364b of the first unit insulator 330a-1 and the protrusion 368 of the second unit insulator 330a-2 may be disposed based on the radial direction with respect to the second opening 380 to form a side surface of the second opening 380. Accordingly, the side surface of the second opening 380 may be formed by at least one protrusion among the protrusion of the first unit insulator 330a-1 and the protrusion of the second unit insulator 330a-2.

In addition, the groove 366 may be concavely formed in the second side surface 365 of the second unit insulator 330a-2 in the circumferential direction so that the end portion of the first side surface outer protrusion 364b of the first unit insulator 330a-1 is disposed in the groove 366 to improve stiffness of the insulator 330 when the unit insulators 330a are annularly assembled. In addition, the groove 367 may be formed in the first side surface 363 of the first unit insulator 330a-1 in the circumferential direction so that an end portion of the protrusion 368 of the second unit insulator 330a-2 is disposed in the groove 367.

The hole H may be formed by the first side surface 363 which is one side of the first unit insulator 330a-1, the second side surface 365 which is the other side of the second unit insulator 330a-2, wherein the first side surface 363 and the second side surface 365 are disposed to be spaced apart from each other in the circumferential direction, the first side surface inner protrusion 364a of the first unit insulator 330a-1, the first side surface outer protrusion 364b of the first unit insulator 330a-1, and the protrusion 368 of the second unit insulator 330a-2. That is, the first side surface 363 of the first unit insulator 330a-1, the second side surface 365 of the second unit insulator 330a-2, the first side surface inner protrusion 364a of the first unit insulator 330a-1, the first side surface outer protrusion 364b of the first unit insulator 330a-1, and the protrusion 368 of the second unit insulator 330a-2 form the hole H accommodating the coil 320.

In this case, as illustrated in FIG. 13, the first side surface inner protrusion 364a of the first unit insulator 330a-1 and the protrusion 368 of the second unit insulator 330a-2 may be disposed to be stacked in the shaft direction. Accordingly, the one region of the coil 320 disposed in the hole H is prevented from being exposed to the inner side surface 361 of the insulator 330. That is, the one region of the coil 320 disposed in the hole H is covered by the first side surface inner protrusion 364a of the first unit insulator 330a-1 and the protrusion 368 of the second unit insulator 330a-2.

Meanwhile, the second opening 380 and the hole H capable of guiding an arrangement of the coil 320 may be formed according to various examples of the unit insulator 330a and an arrangement thereof. For example, the second opening 380 and the hole H may be formed according to various examples of the first unit insulator 330a-1 and the second unit insulator 330a-2 which are disposed adjacent to each other in the circumferential direction. Accordingly, the end portion of the coil 320 may be disposed between the first unit insulator 330a-1 and the second unit insulator 330a-2 based on the circumferential direction.

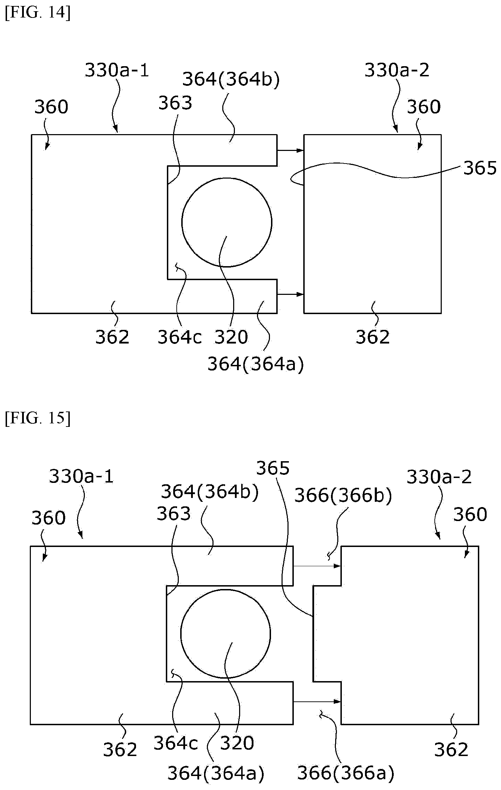

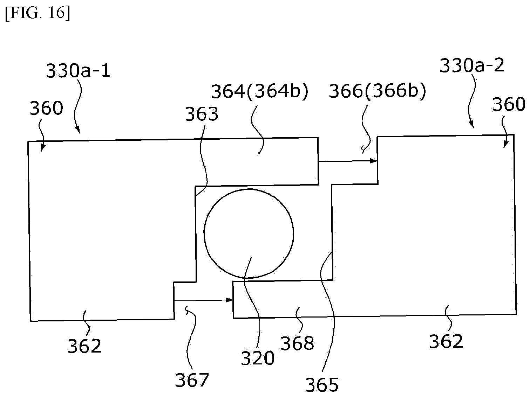

FIG. 14 is a view illustrating a first example of an arrangement of a unit insulator according to the embodiment, FIG. 15 is a view illustrating a second example of an arrangement of a unit insulator according to the embodiment, and FIG. 16 is a view illustrating a third example of an arrangement of a unit insulator according to the embodiment.

Referring to FIG. 14, a first unit insulator 330a-1 may include one or more protrusions 364 formed to protrude from a first side surface 363 of an outer side portion 360 in a circumferential direction.

The protrusions 364 may include a first side surface inner protrusion 364a and a first side surface outer protrusion 364b which are disposed to be spaced apart from each other in a radial direction. In this case, the first side surface inner protrusion 346a may be disposed inside a second opening 380, and the first side surface outer protrusion 364b may be disposed thereoutside. Accordingly, the first side surface inner protrusion 364a and the first side surface outer protrusion 364b may form a side surface of the second opening 380.

In addition, one region of a coil 320 may be disposed between the first side surface inner protrusion 364a and the first side surface outer protrusion 364b in the radial direction.

Accordingly, two protrusions 364 may be formed to protrude from the first side surface 363 of the outer side portion 360 of the first unit insulator 330a-1 in the circumferential direction, and the one region of the coil 320 may be disposed between the protrusions 364 in the radial direction. Accordingly, when the first unit insulator 330a-1 and a second unit insulator 330a-2 are disposed adjacent to each other in the circumferential direction, two protrusions 364 of the first unit insulator 330a-1 and a second side surface 365 of the second unit insulator 330a-2 may form a hole H.

In FIG. 14, an example in which one or more protrusions 364 are formed to protrude from the first side surface 363 of the outer side portion 360 of the first unit insulator 330a-1 in the circumferential direction in order to form the second opening 380 is illustrated, but the present invention is not limited thereto. For example, the first unit insulator 330a-1 illustrated in FIG. 14 may be described as a groove 364c concavely formed in the first side surface 363 of the outer side portion 360 in the circumferential direction. In this case, the groove 364c may be formed at a central portion of the first side surface 363. In this case, the groove 364c may be formed in a shaft direction to form the hole H, and the one region of the coil 320 may be disposed in the groove 364c. Accordingly, when the first unit insulator 330a-1 and the second unit insulator 330a-2 are disposed adjacent to each other in the circumferential direction, the groove 364c of the first unit insulator 330a-1 and the second side surface 365 of the second unit insulator 330a-2 may form the hole H.

Referring to FIG. 15, a first unit insulator 330a-1 may include one or more protrusions 364 formed to protrude from a first side surface 363 of an outer side portion 360 in a circumferential direction. In addition, a second unit insulator 330a-2 may include one or more grooves 366 in a second side surface 365 of an outer side portion 360 to correspond to the protrusions 364. In this case, the grooves 366 may be concavely formed in the circumferential direction to be coupled to the protrusions 364 of the first unit insulator 330a-1. Accordingly, one or more protrusions 364 of the first unit insulator 330a-1 may be disposed in the grooves 366 of the second unit insulator 330a-2.

Accordingly, when the first unit insulator 330a-1 and the second unit insulator 330a-2 are disposed adjacent to each other in the circumferential direction, two protrusions 364 and the first side surface 363 of the first unit insulator 330a-1 and the second side surface 365 of the second unit insulator 330a-2 may form a hole H.

As illustrated in FIG. 15, the protrusions 364 of the first unit insulator 330a-1 may include a first side surface inner protrusion 364a and a first side surface outer protrusion 364b which are disposed to be spaced apart from each other in a radial direction. In addition, the grooves 366 may be formed to correspond to the protrusions 364. Accordingly, the grooves may include a second side surface inner groove 366a coupled to the first side surface inner protrusion 364a and a second side surface outer groove 366b coupled to the first side surface outer protrusion 364b.

Accordingly, two protrusions 364 may be formed on the first side surface 363 of the outer side portion 360 of the first unit insulator 330a-1 to protrude in the circumferential direction, two grooves 366 may be concavely formed in the second side surface 365 of the outer side portion 360 of the second unit insulator 330a-2 in the circumferential direction, and the two protrusions 364 may be disposed in the grooves 366. In this case, one region of the coil 320 may be disposed between the two protrusions 364 in the radial direction.

Accordingly, one region of the outer side portion 360 of the first unit insulator 330a-1 and one region of the outer side portion 360 of the second unit insulator 330a-2 may be disposed to overlap in the radial direction by coupling the protrusions 364 and the grooves 366. Accordingly, when unit insulators 330a are annularly assembled, coupling of the protrusions 364 and the grooves 366 may improve stiffness of an insulator 330.

Referring to FIG. 16, a first unit insulator 330a-1 may include at least one groove in a first side surface 363 of an outer side portion 360, a second unit insulator 330a-2 may include at least one protrusion protruding from a second side surface 365 of an outer side portion 360 in a circumferential direction, and the protrusion of the second unit insulator 330a-2 may be coupled to the groove of the first unit insulator 330a-1.

The first unit insulator 330a-1 may include a groove 367 concavely formed in the first side surface 363 of the outer side portion 360 in the circumferential direction. In addition, the second unit insulator 330a-2 may include a protrusion 368 protruding from the second side surface 365 of the outer side portion 360 in the circumferential direction. In addition, the protrusion 368 formed on the second side surface 365 of the second unit insulator 330a-2 may be coupled to the groove 367 formed on the first side surface 363 of the first unit insulator 330a-1.

As illustrated in FIG. 16, the first unit insulator 330a-1 may include a first side surface outer protrusion 364b protruding from the first side surface 363 of the outer side portion 360 in the circumferential direction and the groove 367 concavely formed at an inner side of the first side surface 363 of the outer side portion 360 in the circumferential direction. In addition, the second unit insulator 330a-2 may include the protrusion 368 protruding in the circumferential direction of an inner side of the second side surface 365 of the outer side portion 360 and a groove 366 concavely formed at an outer side of the second side surface 365 of the outer side portion 360 in the circumferential direction. In this case, the groove 366 formed at the outer side of the second side surface 365 may be a second side surface outer groove 366b.

In this case, the first side surface outer protrusion 364b and the groove 367 of the first unit insulator 330a-1 may be disposed to be spaced apart from each other in a radial direction. In addition, the protrusion 368 and the second side surface outer groove 366b of the second unit insulator 330a-2 may be disposed to be spaced apart from each other in the radial direction.

Accordingly, the protrusion of the first unit insulator 330a-1 and the protrusion of the second unit insulator 330a-2 may form a side surface of a second opening 380. Specifically, the first side surface outer protrusion 364b of the first unit insulator 330a-1 and the protrusion 368 of the second unit insulator 330a-2 may form the side surface of the second opening 380.

That is, the first side surface outer protrusion 364b of the first unit insulator 330a-1 may be coupled to the second side surface outer groove 366b of the second unit insulator 330a-2. In addition, the protrusion 368 of the second unit insulator 330a-2 may be coupled to the groove 367 of the first unit insulator 330a-1. Accordingly, one region of the outer side portion 360 of the first unit insulator 330a-1 and one region of the outer side portion 360 of the second unit insulator 330a-2 may be disposed to overlap in the radial direction.

When unit insulators 330a are annularly assembled, coupling of the first side surface outer protrusion 364b of the first unit insulator 330a-1 and the second side surface outer groove 366b of the second unit insulator 330a-2 and coupling of the protrusion 368 of the second unit insulator 330a-2 and the groove 367 of the first unit insulator 330a-1 may improve stiffness of the insulator 330.

When the unit insulator 330a illustrated in FIG. 16 and the unit insulator 330a illustrated in FIG. 11 are compared, there is a difference in that the unit insulator 330a illustrated in FIG. 11 further includes a first side surface inner protrusion 364a.

Accordingly, when the first unit insulator 330a-1 and the second unit insulator 330a-2 are disposed adjacent to each other in the circumferential direction, the first side surface 363 and the first side surface outer protrusion 364b of the first unit insulator 330a-1 and the second side surface 365 and the protrusion 368 of the second unit insulator 330a-2 may form a hole H.

Meanwhile, when a current is supplied to the coil 320, an electrical interaction may be induced between the coil 320 and the magnet of the rotor 400, and thus, the rotor 400 may rotate. In the case in which the rotor 400 rotates, the shaft 500 rotates with the rotor 400. In this case, the shaft 500 may be supported by the bearing 10.

The rotor 400 may be disposed inside the stator 300. In addition, the shaft 500 may be coupled to a central portion.

The rotor 400 may be formed by coupling the magnet (not shown) to a rotor core (not shown). For example, the rotor 400 may be formed as a type in which the magnet is disposed on an outer circumferential surface of the rotor core.

Accordingly, the magnet generates a rotating magnetic field with the coil 320 wound around the stator 300. The magnet may be disposed so that an N-pole and an S-pole are alternately disposed in the circumferential direction based on a center of the shaft 500.

Accordingly, due to the electrical interaction between the coil 320 and the magnet, the rotor 400 rotates, and when the rotor 400 rotates, the shaft 500 rotates, and thus, a driving force of the motor 1 is generated.

Meanwhile, the rotor core of the rotor 400 may be manufactured by coupling a plurality of divided cores or manufactured as a single core type rotor core formed as one core.

As illustrated in FIG. 1, the shaft 500 may be rotatably supported by the bearing 10 inside the housing 100 and the cover 200.

The busbar 600 may be disposed on the stator 300.

In addition, the busbar 600 may be electrically connected to the coil 320 of the stator 300.

The busbar 600 may include a busbar body (not shown) and a plurality of terminals (not shown) disposed on the busbar body.

The busbar body may be a mold product having a ring shape formed through an injection molding process. In addition, the terminal may be disposed on the busbar body through an insert-injection molding process. In this case, the terminal may be electrically connected to the coil 320 of the stator 300.

The sensor part 700 may detect a magnetic force of a sensing magnet installed to be rotatable in conjunction with the rotor 400 to check a present position of the rotor 400 so as to detect rotation of the shaft 500.

The sensor part 700 may include a sensing magnet assembly 710 and a printed circuit board (PCB) 720.

The sensing magnet assembly 710 is coupled to the shaft 500 to operate in conjunction with the rotor 400 so as to detect the position of the rotor 400. In this case, the sensing magnet assembly 710 may include sensing magnets and a sensing plate. The sensing magnets and the sensing plate may be coaxially coupled.

The sensing magnets may include main magnets disposed close to a hole forming an inner circumferential surface thereof in the circumferential direction and sub-magnets. The main magnets may be arranged like drive magnets inserted into the rotor 400 of the motor. The sub-magnets may be divided further than the main magnets so that the sub-magnets may be formed to have poles of which the number is greater than the number of poles of the main magnets. Accordingly, a rotation angle may be divided and measured more precisely, and thus the motor may be driven more smoothly.

The sensing plate may be formed of a metal material having a disc shape. The sensing magnet may be coupled to an upper surface of the sensing plate. In addition, the sensing plate may be coupled to the shaft 500. In this case, a hole through which the shaft 500 passes may be formed in the sensing plate.

A sensor configured to detect a magnetic force of the sensing magnets may be disposed on the PCB 720. In this case, a Hall integrated circuit (IC) may be provided as the sensor. In addition, the sensor may detect changes in an N-pole and an S-pole of the sensing magnet to generate a sensing signal.

While the invention has been shown and described with reference to the exemplary embodiments thereof, it will be understood by those skilled in the art that the present invention may be variously changed and modified without departing from the spirit and scope of the invention as defined by the appended claims.

### [Reference Numerals]

| | | | |
|---|---|---|---|
| 1: | MOTOR | 100: | HOUSING |
| 200: | COVER | 300: | STATOR |
| 310: | STATOR CORE | 320: | COIL |
| 330: | INSULATOR | 340: | BODY |
| 350: | INNER SIDE PORTION | 360: | OUTER SIDE PORTION |
| 361: | INNER SIDE SURFACE | 362: | UPPER SURFACE |
| 363: | FIRST SIDE SURFACE | 364: | PROTRUSION |
| 365: | SECOND SIDE SURFACE | | |
| 370: | FIRST OPENING | 380: | SECOND OPENING |
| 400: | ROTOR | 500: | SHAFT |
| 600: | BUSBAR | 700: | SENSOR PART |
| H: | HOLE | | |

## Claims

1. A motor comprising:
a stator;
a rotor disposed in the stator; and
a shaft coupled to the rotor,
wherein the stator includes a stator core, an insulator coupled to the stator core, and a coil disposed on the insulator,
the insulator includes a body around which the coil is wound, an outer side portion extending from the body, a first opening formed in an inner side surface of the outer side portion, and a second opening formed in an upper surface of the outer side portion,
one region of the coil is disposed in a hole formed by connecting the first opening and the second opening, and
the coil disposed in the hole is not exposed to an inner side surface of the insulator.

2. The motor of claim 1, wherein:
the insulator includes a plurality of unit insulators; and
the hole is formed by coupling two unit insulators among the plurality of unit insulators.

3. A motor comprising:
a stator;
a rotor disposed in the stator; and
a shaft coupled to the rotor,
wherein the stator includes a stator core, an insulator coupled to the stator core, and a coil disposed on the insulator,
the insulator includes a first unit insulator, a second unit insulator disposed adjacent to the first unit insulator based on a circumferential direction, a first opening formed in an inner side surface, a second opening formed in an upper surface, and a hole formed by connecting the first opening and the second opening,
each of the first unit insulator and the second unit insulator includes a body on which the coil is disposed, and an outer side portion extending from the body,
the first opening is formed by an inner side surface of the outer side portion of the first unit insulator and an inner side surface of the outer side portion of the second unit insulator,
the second opening is formed by an upper surface of the outer side portion of the first unit insulator and an upper surface of the outer side portion of the second unit insulator,
at least one of a first side surface of the first unit insulator and a second side surface of the second unit insulator include protrusions, and
at least one of the protrusions forms a side surface of the second opening.

4. The motor of claim 3, wherein:
one region of the coil is disposed in the hole; and
the coil disposed in the hole is not exposed to the inner side surface of the insulator.

5. The motor of claim 3, wherein:
the protrusions are formed as two protrusions protruding from the first side surface of the outer side portion of the first unit insulator in the circumferential direction; and
one region of the coil is disposed between the protrusions in a radial direction.

6. The motor of claim 3, wherein:
the second unit insulator includes at least one groove formed in the second side surface of the outer side portion; and
the at least one of the protrusions of the first unit insulator is disposed in the groove.

7. The motor of claim 6, wherein:
the protrusions are formed as two protrusions protruding from the first side surface of the outer side portion of the first unit insulator in the circumferential direction;
the groove is formed as two grooves formed concave in the second side surface of the outer side portion of the second unit insulator in the circumferential direction; and
each of the two protrusions is disposed in each of the two grooves.

8. The motor of claim 7, wherein one region of the coil is disposed between the two protrusions in a radial direction.

9. The motor of claim 6, wherein:
the first unit insulator includes at least one groove formed in the first side surface of the outer side portion;
the second unit insulator includes at least one protrusion protruding from the second side surface of the outer side portion in the circumferential direction; and
the protrusion of the second unit insulator is coupled to the groove of the first unit insulator.

10. The motor of claim 9, wherein the protrusion of the first unit insulator and the protrusion of the second unit insulator form a side surface of the second opening.

11. The motor of claim 9, wherein one region of the coil is disposed between the protrusion of the first unit insulator and the protrusion of the second unit insulator in a radial direction.

12. The motor of claim 1 or 3, wherein the coil is disposed to pass through the first opening and the second opening.

13. The motor of claim 3, wherein one coil among the coils disposed on the first unit insulator and the second unit insulator passes through the hole.

14. The motor of claim 3, wherein the first opening is defined by a groove formed at one side of the inner side surface of the outer side portion of the first unit insulator and the other side of the inner side surface of the outer side portion of the second unit insulator.

15. The motor of claim 14, wherein:
the second unit insulator includes a groove formed at the other side of the inner side surface of the outer side portion; and
the first opening is defined by the groove formed in the first unit insulator and the groove formed in the second unit insulator.

16. The motor of claim 3, wherein:
the first unit insulator includes a groove formed at one side of the inner side surface of the outer side portion;
the second unit insulator includes a groove formed at the other side of the inner side surface of the outer side portion; and
the groove formed at one side of the inner side surface of the first unit insulator is disposed to face the groove formed at the other side of the inner side surface of the second unit insulator.

17. A motor comprising:
a stator;
a rotor disposed in the stator; and
a shaft coupled to the rotor,
wherein the stator includes a stator core, an insulator coupled to the stator core, and a coil disposed on the insulator,
the insulator includes a body on which the coil is disposed, an outer side portion extending from the body, and a hole connecting an opening formed in an inner side surface and an opening formed in an upper surface of the outer side portion, and
an end portion of the coil wound around the body is guided by the hole and exposed from the upper surface.

18. The motor of claim 17, wherein:
the insulator includes a first unit insulator and a second unit insulator which are disposed in a circumferential direction; and
the hole is formed between the first unit insulator and the second unit insulator.

19. The motor of claim 18, wherein:
the first unit insulator includes a first side surface inner protrusion and a first side surface outer protrusion which protrude from one side of the outer side portion in the circumferential direction;
the first side surface inner protrusion and the first side surface outer protrusion are disposed to be spaced apart from each other in a radial direction; and
one region of the coil is disposed between the first side surface inner protrusion and the first side surface outer protrusion.

20. The motor of claim 19, wherein the first side surface inner protrusion is disposed above a first opening formed in the inner side surface.

21. The motor of claim 20, wherein:
the second unit insulator includes a second side surface inner protrusion protruding from the other side of the outer side portion in the circumferential direction;
the first unit insulator includes a groove concavely formed in a first side surface of the outer side portion in the circumferential direction; and
the second side surface inner protrusion is disposed in the groove and supported by the outer side portion of the first unit insulator.

22. The motor of claim 21, wherein a lower surface of the second side surface inner protrusion is disposed to be in contact with an upper surface of the first side surface inner protrusion.

23. The motor of claim 19, wherein:
the second unit insulator includes a groove concavely formed in a second side surface of the outer side portion in the circumferential direction; and
an end portion of the first side surface outer protrusion is disposed in the groove of the second unit insulator.

24. A motor comprising:
a stator;
a rotor disposed in the stator; and
a shaft coupled to the rotor,
wherein the stator is formed by arranging a plurality of unit stators in a circumferential direction,
the unit stator includes a stator core, an insulator coupled to the stator core, and a coil disposed on the insulator,
the insulator includes a body on which the coil is disposed, an outer side portion extending from the body, a first side surface inner protrusion and a first side surface outer protrusion which protrude from a first side surface of the outer side portion in the circumferential direction, and a second side surface inner protrusion protruding from a second side surface of the outer side portion in the circumferential direction,
the first side surface inner protrusion and the first side surface outer protrusion are disposed to be spaced apart from each other in a radial direction, and
a distance from an upper surface of the outer side portion to a lower surface of the second side surface inner protrusion is the same as a distance from the upper surface of the outer side portion to an upper surface of the first side surface inner protrusion.
